# EUROPEAN PATENT APPLICATION

(11) **EP 4 383 122 A1**
(43) Date of publication of application: **12.06.2024**
(21) Application number: 22212205.3
(22) Date of filing: 08.12.2022
(51) Int. Cl.: G06F 40/109, G06F 40/129

(54) **FONT LIBRARY GENERATION METHOD AND APPARATUS, ELECTRONIC DEVICE AND STORAGE MEDIUM**

(71) Applicant: CHU, John, 0612 Auckland (NZ)
(72) Inventor: CHU, John, 0612 Auckland (NZ)
(74) Representative: Ipey

(57) **Abstract**

The present application provides a font library design method and apparatus. The method includes: acquiring a stylized stroke library which includes a plurality of stylized strokes; establishing a stylized component library based on a basic component library and the stylized stroke library, the stylized component library including a plurality of stylized components; stylizing each character based on a structure library and the stylized component library to obtain a corresponding stylized character; and storing the stylized character in a font library.

## Description

### TECHNICAL FIELD

The present application relates to the field of artificial intelligence, and in particular to a font library generation method and apparatus, an electronic device and a storage medium.

### BACKGROUND

A font library refers to a collection of digital fonts containing the main characters of a certain language, which is widely used in computers, mobile terminals and other related electronic products.

For phonetic languages, the number of characters used is limited. For example, in English, the characters used are mainly Latin letters, so it does not require a lot of work to design a font library. However, for ideographic languages, the number of characters used is much larger than that of phonetic languages. Taking Chinese characters as an example, there are more than 3,000 commonly used Chinese characters, and the Chinese character coding character set GB2312 for information exchange contains more than 6,000 Chinese characters, so it takes a huge amount of work to design a font library.

In the existing technology, to design a Chinese font library, Chinese characters need to be decomposed into strokes which are designed by a designer, and then the designed strokes are fitted into Chinese characters to generate a font library. In Chinese characters, strokes have a lot of variant forms, so a large number of adjustments are necessary. Moreover, because a large number of Chinese characters are composed of two or more individual characters, many of these adjustments are repeated. Therefore, font library design has the problems of long design cycle, complicated design process, low efficiency, high cost and no standardization.

Prior technical literature: Publication No. CN112434763A, the abstract of which is as follows.

The invention provides a computer-based Chinese character skeleton generation method, which comprises the following steps: step a, imaging a preset representative character according to a configured standard font and pixel area to obtain a picture representation of the representative character; step b, performing graying, binarization and morphological transformation to obtain a required binary image representation of the representative character; step c, splitting a Chinese character graph into primitives and storing the primitives separately, and refining the primitives into primitive skeletons by using a thinning algorithm; step d, utilizing parameters in a database to perform affine transformation and then recombination on the skeleton primitives; and step e, cutting out redundant pixel elements to obtain a skeleton of a new character to be generated. The invention solves the problem that characters need to be designed one by one for a current font library, thus requiring long time and complicated work and causing low efficiency and high cost.

### SUMMARY

The present application aims to provide a font library generation method and apparatus, an electronic device and a storage medium to solve the problems of font library design in the existing technology.

According to one aspect of embodiments of the present application, there is provided a font library generation method, including: acquiring a stylized stroke library which includes a plurality of stylized strokes; establishing a stylized component library based on a basic component library and the stylized stroke library, the stylized component library including a plurality of stylized components; stylizing each character based on a structure library and the stylized component library to obtain a corresponding stylized character; and storing the stylized character in a font library.

According to one aspect of embodiments of the present application, there is provided a font library generation apparatus, including: an acquisition module for acquiring a stylized stroke library which includes a plurality of stylized strokes; an establishment module for establishing a stylized component library based on a basic component library and the stylized stroke library, the stylized component library including a plurality of stylized components; a stylization module for stylizing each character based on a structure library and the stylized component library to obtain a corresponding stylized character; and a storage module for storing the stylized character in a font library.

According to one aspect of embodiments of the present application, there is provided an electronic device including a memory and a processor, where the memory stores program instructions which, when executed by the processor, cause the processor to implement any method according to the above aspects.

According to one aspect of embodiments of the present application, there is provided a computer-readable storage medium storing program instructions, wherein the program instructions, when executed by a processor, cause the processor to implement any method according to the above aspects.

The technical scheme provided by the embodiments of the present application may have the following beneficial effects.

In the technical scheme provided by some embodiments of the present application, a stylized stroke library is acquired which includes a plurality of stylized strokes; a stylized component library is established based on a basic component library and the stylized stroke library, the stylized component library including a plurality of stylized components; each character is stylized based on a structure library and the stylized component library to obtain a corresponding stylized character; and the stylized character is stored in a font library. In this way, the font library generation process is simplified, the threshold for font library design is lowered, and font library design involves font structure and character pattern change instead of only changing stroke thickness as in traditional font design.

It is to be understood that the foregoing general description and the following detailed description are exemplary only and do not limit the present application.

### BRIEF DESCRIPTION OF DRAWINGS

The accompanying drawings, which are incorporated into and constitute a part of the specification, illustrate embodiments consistent with the present application and, together with the description, serve to explain the principles of the present application.
Fig. 1 is a flowchart of an embodiment of a font library generation method of the present application;
Fig. 2 is a schematic diagram of a basic form of a stroke " 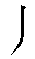 " in an embodiment of a font library generation method of the present application;
Fig. 3 is a schematic diagram of a basic component " 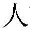 " including a stroke " 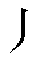 " in an embodiment of a font library generation method of the present application;
Fig. 4 is a schematic diagram of a narrowed variant form " 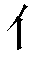 " of a basic component "A " in an embodiment of a font library generation method of the present application;
Fig. 5 is a schematic diagram of a bent and stretched variant form " 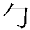 " of a basic component " 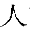 " in an embodiment of a font library generation method of the present application;
Fig. 6 is a schematic diagram of a flattened and compressed variant form " 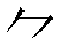 " of " 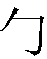 " in an embodiment of a font library generation method of the present application;
Fig. 7 is a detailed flowchart of S13 in Fig. 1;
Fig. 8 is a flowchart of another embodiment of a font library generation method of the present application;
Fig. 9 is a schematic diagram of an embodiment of a font library generation apparatus of the present application;
Fig. 10 is a schematic diagram of an embodiment of an electronic device of the present application; and
Fig. 11 is a schematic diagram of an embodiment of a computer-readable storage medium of the present application.

### DETAILED DESCRIPTION

Exemplary embodiments will now be described more fully with reference to the accompanying drawings. However, exemplary embodiments can be implemented in many forms and should not be construed as being limited to the examples set forth herein; on the contrary, these embodiments are provided to make the present application more comprehensive and complete, and to fully convey the concept of the example embodiments to those skilled in the art.

In addition, the described features, structures, or characteristics may be combined in any suitable manner in one or more embodiments. In the following description, numerous specific details are provided to give a thorough understanding of the embodiments of the present application. However, those skilled in the art will realize that the technical scheme of the present application can be practiced without one or more of the specific details, or with other methods, components, devices, steps, etc. In other cases, well-known methods, devices, implementations or operations are not shown or described in detail to avoid obscuring aspects of the present application.

The block diagrams shown in the drawings are only functional entities and do not necessarily correspond to physically separate entities. That is, these functional entities can be implemented in the form of software, or in one or more hardware modules or integrated circuits, or in different networks and/or processor devices and/or microcontroller devices.

The flowchart shown in the drawings is only an exemplary illustration, and does not necessarily include all contents and operations/steps, nor do the operations/steps have to be executed in the described order. For example, some operations/steps can be decomposed, while some operations/steps can be combined or partially combined, so the actual execution order may change according to the actual situation.

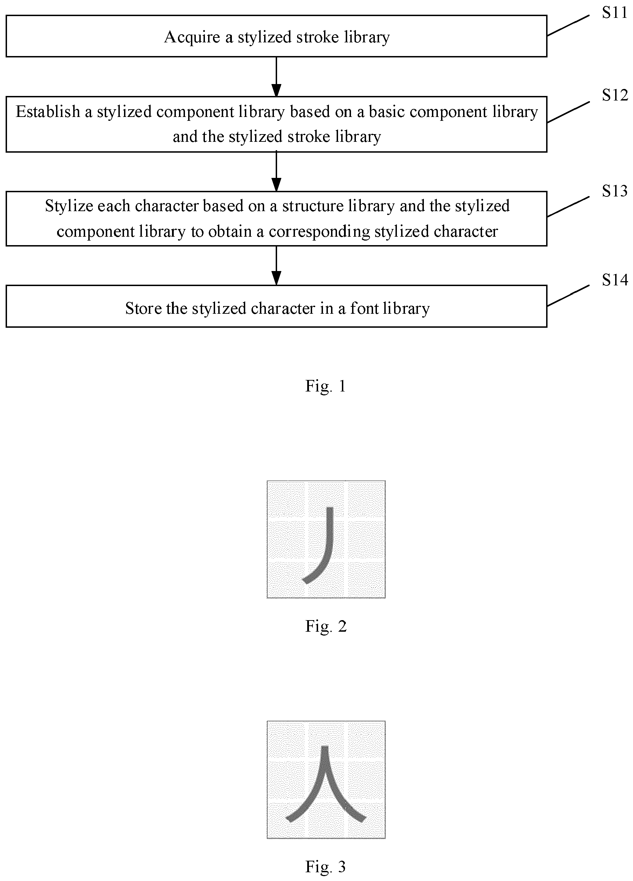

Fig. 1 schematically shows a flowchart of an embodiment of a font library generation method of the present application. The executive body of the font library generation method may be a server, such as a client 101 shown in Fig. 1. Referring to Fig. 1, the font library generation method may include the following steps.

At step S11, a stylized stroke library is acquired.

The font library in this embodiment is designed for languages with an ideographic function (ideographic languages and ideo-phonographic languages), and characters generally correspond to languages with an ideographic function, such as Chinese characters (Chinese characters in Chinese, Japanese and Korean), Chũ_{'} Nôm in Vietnamese, etc. For the convenience of description, the font library generation method provided in the present application will be described below by taking Chinese characters as an example. In fact, these methods can be applied to other languages with an ideographic function.

Stylized strokes can be obtained by stylizing other strokes which can be basic strokes or adjusted/designed strokes. Specifically, a stylized stroke library can be imported, and/or in response to an instruction for adjusting another stroke library, strokes in the another stroke library can be adjusted to obtain the stylized stroke library. There may be one or more other stroke libraries, specifically including at least one of a basic stroke library or existing stroke libraries.

The stylized stroke library includes a plurality of stylized strokes. To facilitate storage and subsequent processing, the stylized strokes can be stored as vectors. If the stylized strokes are stored as vectors, subsequent stylized components and a generated font library are generally stored as vectors too, which is conductive to storage, modification and use.

At step S12, a stylized component library is established based on a basic component library and the stylized stroke library.

The stylized component library includes a plurality of stylized components. Components refer to single Chinese characters with the ability of character formation and variant forms thereof, which are not necessarily the same as radicals. Each component consists of at least one stroke.

The process of establishing the stylized component library may include replacing strokes contained in each component in the basic component library with corresponding stylized strokes, and may further include optimizing and adjusting at least part of the stylized components as required.

At step S13, each character is stylized based on a structure library and the stylized component library to obtain a corresponding stylized character.

Before a font library is generated, Chinese characters can be decomposed to obtain a basic stroke library, a basic component library and a structure library. The basic stroke library includes a plurality of basic strokes, the basic component library includes a plurality of basic components, and the structure library includes various plane structures of Chinese characters. Each structure includes the number of components that make up the structure and the position of each component, and does not necessarily limit what each component is. The basic stroke library, the basic component library and the structure library can be reused in the generation of different font libraries.

When forming a component, a stroke may be deformed, and a stroke deformation rule can be concluded based on the decomposition of Chinese characters. The stroke deformation rule includes what variant forms each stroke has and how each variant form is deformed. At least some strokes can be deformed according to the stroke deformation rule to obtain variant forms thereof, and the variant forms are added into the stroke library. This adding process can be applied to the stylized stroke library and/or other stroke libraries before stylization (such as the basic stroke library).

Components may be deformed when forming Chinese characters. Therefore, a component deformation rule can be concluded based on the decomposition of Chinese characters. The component deformation rule includes what variant forms each component has and how each variant form is deformed. The number of component deformation rules can be greater than one to adapt to different styles of fonts. At least some components can be deformed according to the component deformation rule to obtain variant forms thereof, and the variant forms are added into the component library. This adding process can be applied to the stylized component library and/or the basic component library.

At least one rule library can be set to store the concluded rules, such as the stroke deformation rule, the component deformation rule, etc.

The processing process from basic strokes to Chinese characters is illustrated below with reference to the drawings by taking a single stroke " 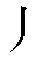 " as an example.

The basic form/original form, i.e. undeformed form, of the basic stroke " 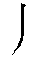 " is shown in Fig. 2. A basic component " 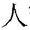 " including this stroke is shown in Fig. 3. In this component, the stroke " 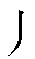 " is deformed, and information such as a form rule and a serial number of such deformation is recorded so as to be added into the stroke library.

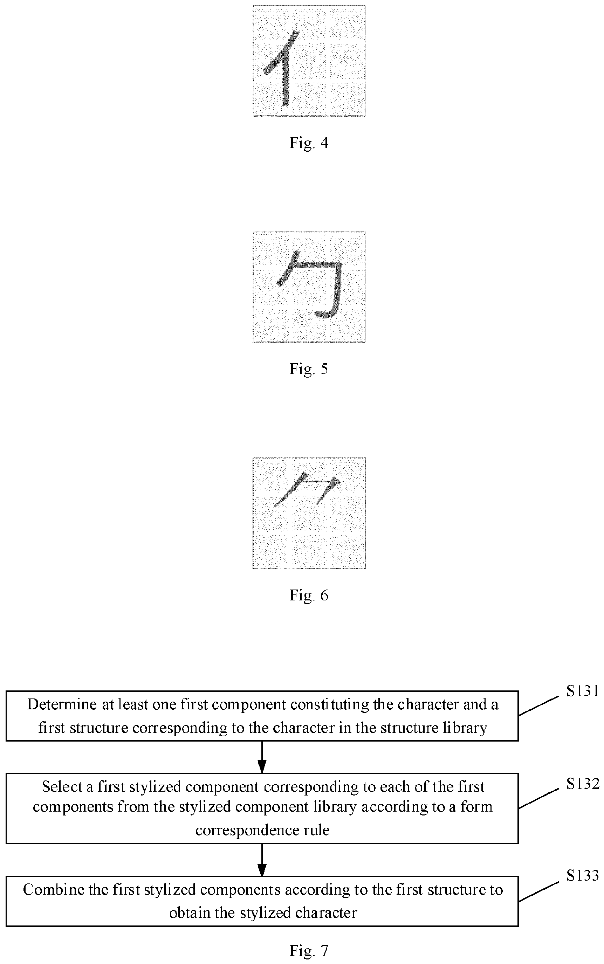

By narrowing the basic component " 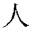 ", a variant form A " shown in Fig. 4 can be obtained; by bending and stretching the basic component " 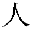 ", a variant form " 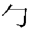 " shown in Fig. 5 can be obtained; and by flattening and compressing the basic component " 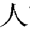 ", a variant form " 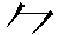 " shown in Fig. 6 can be obtained.

The structure library includes single-body structures and combined structures. The single-body structure has only one component, and the combined structure includes at least two components. The combined structures can be further divided according to the combination mode of components in the combined structure, such as left-right structure, top-bottom structure, left-middle-right structure, etc.

Specific Chinese characters can be obtained by combining structures in the structure library with corresponding components. For example, "A" is composed of a basic component "A" and a basic component " 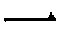 " in a frame structure; " 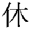 " and " 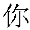 " are each composed of a variant form " 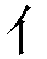 " and another component in a left-right structure; " 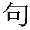 " and " 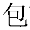 " are each composed of a variant form " 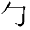 " and another component in an upper right enclosing structure; and " 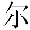 " and " 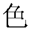 " are each composed of a variant form " 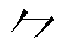 " and another component in a top-bottom structure.

For each Chinese character, character pattern parameters determined based on the basic component library and the structure library may include a corresponding structure in the structure library and specific components corresponding to each position in the structure, and the specific components may come from the basic component library. Each Chinese character can be stylized according to the character pattern parameters thereof.

Among the character pattern parameters of Chinese characters, the parameter for indicating specific components may indicate the form (original form/specific variant form) of the component, or only indicate the component. In case of the latter, character stylization needs to be conducted by referring to a form correspondence rule. The form correspondence rule is concluded based on the decomposition of Chinese characters and the lattice distribution of structures, including the correspondence between the positions of components and the forms to be selected. The number of form correspondence rules can be greater than one to adapt to different styles of fonts. The form correspondence rule may belong to the rule library, such as a component position library.

As shown in Fig. 7, step S13 specifically includes the following steps.

At step S 131, at least one first component constituting the character and a first structure corresponding to the character in the structure library are determined.

The first structure is a structure corresponding to the character in the structure library, and the first component is a specific component corresponding to each position in the first structure. After the first component and the first structure are determined, a corresponding unique character can be found, and vice versa.

At step S132, a first stylized component corresponding to each of the first components is selected from the stylized component library according to a form correspondence rule.

According to the form correspondence rule, which form of the corresponding basic component each first component belongs to can be determined, such that the corresponding first stylized component can be selected accordingly.

At step S 133, the first stylized components are combined according to the first structure to obtain the stylized character.

Specifically, the first stylized component can be placed in a corresponding position in the first structure.

For example, " 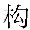 " is a left-right structure, the left component is " 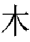 " and the right component is " 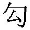 ". By putting the stylized " 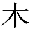 " on the left and the stylized " 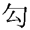 " on the right, the stylized "" 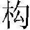 " is obtained.

In order to get a better visual effect, more vision-related parameters can be introduced in the process of generating the font library. These parameters may include at least one of component spacing, visual center of gravity, component center of gravity, visual type face and component type face. The visual center of gravity/visual type face may be determined for the whole font/font library according to actual needs.

The visual center of gravity refers to a center of gravity of the whole character. Because the visual center of gravity of human eyes is on the top, the visual center of gravity is generally above the center of gravity (that is, the center) of the whole character frame. Of course, according to design requirements, the visual center of gravity can also overlap or be located below the center of gravity of the character frame. After determining the visual center of gravity, the center of gravity of each component in each structure can be determined accordingly.

The visual type face may be an average type face proportion of the whole font/font library. After determining the visual type face, the component spacing and/or component type face of each structure can be determined accordingly. Due to the visual characteristics of human eyes, characters with the same actual type face proportion in the same set of fonts/font library may seem to have different type face proportions due to different outlines and complexity degrees.

One factor that affects the outline and complexity degree of characters is structure. In order to further improve the visual effect, the component spacing and/or component type face in at least some structures can be adjusted according to the characteristics of the structures on the basis of the visual type face. For example, the outline of a Chinese character with a fully enclosed structure is generally square, which will expand visually, so the component type face needs to be smaller than the visual type face. Generally, the outline of 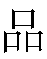 -shaped Chinese characters is triangular. On the basis of the component spacing calculated according to the visual type dace, the vertical spacing between the upper component and the lower two components can be shortened to make the bottom edge of the triangular outline move up.

Another factor that affects the outline and complexity degree of characters is component. For Chinese characters with certain structures, the outline and complexity degree will also be affected by specific components adopted at certain positions in the structure. For example, the outline and complexity degree of a single-body structure are determined by the components used. " 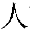 " is a triangular structure, so the bottom edge needs to be moved up. " 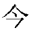 " is a diamond structure, so the corners need to be expanded. In order to further improve the visual effect, adaptive adjustment can be made at the component level. Parameters related to adjustment can be included in the component deformation rule, or adjusted components can be added to the component library as variant forms.

These vision-related parameters can be stored in a separate library, or can be stored in corresponding libraries according to corresponding levels (structures/components).

In the process of combining components, if there are vision-related parameters, combination needs to be conducted according to the vision-related parameters. For example, if the first structure further includes the component center of gravity, the first stylized component can be placed in the corresponding position in the first structure according to the component center of gravity to obtain the stylized character. "According to the component center of gravity" here refers to making the center of gravity of the first stylized component overlap the corresponding component center of gravity.

At step S14, the stylized character is stored in a font library.

In the process of font library generation, the previously used stroke library, component library and even rules can be modified as needed, and then the generation process can be repeated. After obtaining the stylized stroke library/stylized component library, some or all elements therein can be adjusted as needed.

By means of this embodiment, the deformation of strokes in components and the deformation of components in structures are standardized, the font library generation process is simplified, the threshold for font library design is lowered, and font library design involves font structure and character pattern change instead of only changing stroke thickness as in traditional font design.

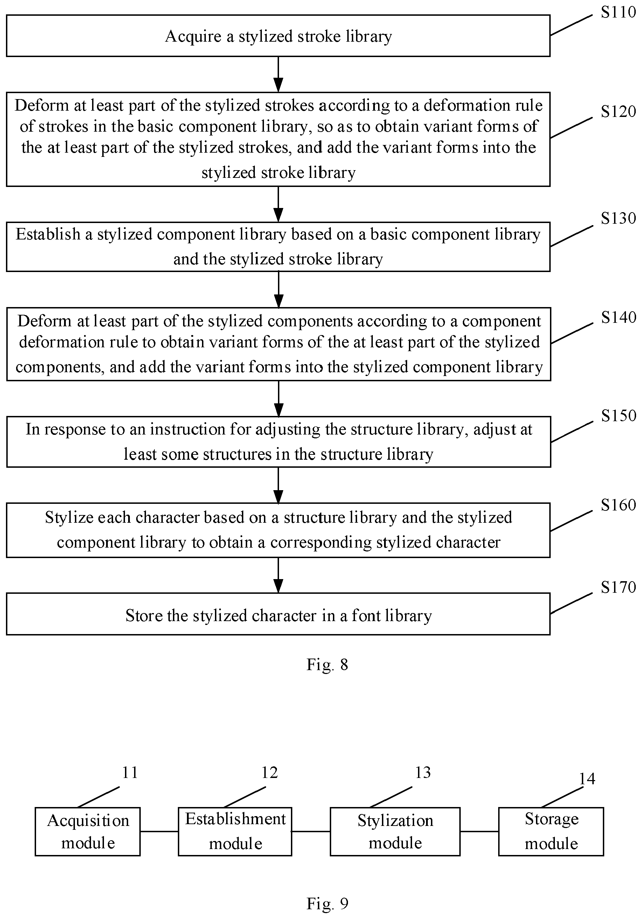

Fig. 8 is a flowchart of another embodiment of a font library generation method of the present application. This embodiment is a further extension of the embodiment shown in Fig. 1, and the same or corresponding parts are not described again. As shown in Fig. 8, this embodiment includes the following steps.

At step S110, a stylized stroke library is acquired.

At step S120, at least part of the stylized strokes are deformed according to a deformation rule of strokes in the basic component library, so as to obtain variant forms of the at least part of the stylized strokes, and the variant forms are added into the stylized stroke library.

At step S130, a stylized component library is established based on a basic component library and the stylized stroke library.

At step S140, at least part of the stylized components are deformed according to a component deformation rule to obtain variant forms of the at least part of the stylized components, and the variant forms are added into the stylized component library.

At step S150, in response to an instruction for adjusting the structure library, at least some structures in the structure library are adjusted.

The instruction may be configured to adjust at least one of component spacing, visual center of gravity, component center of gravity, visual type face and component type face.

At step S160, each character is stylized based on a structure library and the stylized component library to obtain a corresponding stylized character.

At step S170, the stylized character is stored in a font library.

The apparatus embodiments of the present application will be described below, which can be used to carry out the font library generation method in the above embodiments of the present application. For details not disclosed in the apparatus embodiments of the present application, please refer to the embodiments of the font library generation method described above.

As shown in Fig. 9, an embodiment of a font library generation apparatus of the present application includes an acquisition module 11, an establishment module 12, a stylization module 13 and a storage module 14.

Based on the foregoing scheme, the acquisition module 101 is used for acquiring a stylized stroke library which includes a plurality of stylized strokes; the establishment module 102 is used for establishing a stylized component library based on a basic component library and the stylized stroke library, the stylized component library including a plurality of stylized components; the stylization module 103 is used for stylizing each character based on a structure library and the stylized component library to obtain a corresponding stylized character; and the storage module 104 is used for storing the stylized character in a font library.

Those skilled in the art can understand that individual aspects of the present application may be implemented as systems, methods or program products. Accordingly, aspects of the present application may take the form of an entirely hardware embodiment, an entirely software embodiment (including firmware, micro-code, etc.,) or an embodiment combining software and hardware aspects that may all generally be referred to herein as a "circuit," "module" or "system."

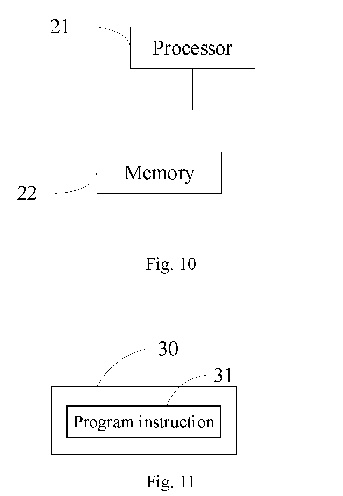

An electronic device according to this embodiment of the present application will be described below with reference to Fig. 10. The electronic device shown in Fig. 10 is just an example and should not limit the scope of functions and application of the embodiments of the present application.

As shown in Fig. 10, the electronic device is in the form of a general-purpose computing device. Components of the electronic device may include but are not limited to: at least one processor 21, at least one memory 22, and a bus connecting different system components (including the processor 21 and the memory 22).

Here, the memory 22 stores program instructions for implementing the method provided by any of the above embodiments, and the processor 21 is used for executing the program instructions stored in the memory 22 to implement the steps of the above method embodiment. Here, the processor 21 may also be called CPU (Central Processing Unit). The processor 21 may be an integrated circuit chip with signal processing capability. Alternatively, the processor 21 may be a general-purpose processor, a digital signal processor (DSP), an application specific integrated circuit (ASIC), a field programmable gate array (FPGA) or other programmable logic devices, discrete gate or transistor logic devices, and discrete hardware components. The general-purpose processor may be a microprocessor or the processor may be any conventional processor.

The memory 22 may include a computer-readable medium in the form of a volatile memory, such as a random access memory (RAM) and/or a cache memory, and may further include a read-only memory (ROM).

The bus may be one or more of several types of bus structures, including a memory bus or a memory controller, a peripheral bus, an accelerated graphics port, a processing unit or a local bus using any of a variety of bus structures.

The electronic device may communicate with one or more external devices (such as a keyboard, a pointing device, a Bluetooth device, etc.), one or more devices that enable users to interact with the electronic device, and/or any device that enables the electronic device to communicate with one or more other computing devices (such as a router, a modem, etc.). Such communication can be done through an input/output (I/O) interface. Furthermore, the electronic device may also communicate with one or more networks (such as a local area network (LAN), a wide area network (WAN), and/or a public network such as the Internet) through a network adapter.

Fig. 11 is a schematic diagram of an embodiment of a computer-readable storage medium of the present application. As shown in Fig. 11, the computer-readable storage medium 30 of the embodiment of the present application stores program instructions 31 which, when executed, implement the method provided by the above embodiment of the present application. Here, the program instructions 31 can form a program file and be stored in the computer-readable storage medium 30 in the form of a software product, such that a computer device (which may be a personal computer, a server, or a network device) or a processor can execute all or part of the steps of the methods in various embodiments of the present application. The afore-mentioned computer-readable storage medium 30 may include: various media that can store program codes, such as a USB flash drive, a mobile hard disk, a read-only memory (ROM), a random access memory (RAM), a magnetic disk or an optical disk, or a terminal device such as a computer, a server, a mobile phone, and a tablet computer.

From the above description of the embodiments, it is easy for those skilled in the art to understand that the exemplary embodiments described herein may be implemented in software or software combined with necessary hardware. Therefore, the technical schemes according to the embodiments of the present application may be embodied in the form of a software product, which may be stored in a non-volatile storage medium (which may be a CD-ROM, USB flash drive, mobile hard drive, etc.) or on a network, and may include several instructions to enable a computing device (which may be a personal computer, server, terminal device, or network device, etc.) to execute the method according to the embodiments of the present application.

According to one embodiment of the present application, there is also provided a computer-readable storage medium that stores a program product capable of implementing the method described above in the specification. In some possible implementations, individual aspects of the application may also be embodied in the form of a program product including program code, which, when executed on a terminal device, causes the terminal device to perform the steps according to various exemplary embodiments of the present application described in the above "exemplary methods" section herein.

According to an embodiment of the present application, the program product for realizing the above method may be a portable compact disk read-only memory (CD-ROM) and includes program codes, and can be run on a terminal device such as a personal computer. However, the program product of the present application is not limited to this. Herein, the readable storage medium may be any tangible medium containing or storing a program, which can be used by or in combination with an instruction execution system, apparatus or instrument.

The program product may use any combination of one or more computer-readable media. The computer-readable medium can be a computer-readable signal medium or a computer-readable storage medium. A computer-readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer-readable storage medium would include the following: an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

A computer-readable signal medium may include a propagated data signal with computer-readable program code embodied therein, for example, in baseband or as part of a carrier wave. Such a propagated signal may take any of a variety of forms, including, but not limited to, electro-magnetic, optical, or any suitable combination thereof. A computer-readable signal medium may be any computer-readable medium that is not a computer-readable storage medium and that can communicate, propagate, or transport a program for use by or in connection with an instruction execution system, apparatus, or device.

Program code embodied on a computer-readable medium may be transmitted using any appropriate medium, including but not limited to wireless, wireline, optical fiber cable, RF, etc., or any suitable combination of the foregoing.

Computer program code for carrying out operations of the present application may be written in any combination of one or more programming languages, including an object-oriented programming language such as Java, C++, or the like, and conventional procedural programming languages, such as the "C" programming language or similar programming languages. The program code may execute entirely on the user's computer, partly on the user's computer, as a stand-alone software package, partly on the user's computer and partly on a remote computer, or entirely on a remote computer or server. In the latter scenario involving a remote computer, the remote computer may be connected to the user's computer through any type of network, including a local area network (LAN) or a wide area network (WAN), or the connection may be made to an external computer (for example, through the Internet using an Internet Service Provider).

In addition, the above drawings are only schematic illustrations of the processes included in the method according to the exemplary embodiments of the present application, and are not intended to be limiting. It is easy to understand that the processes shown in the above drawings do not indicate or limit a chronological order of these processes. In addition, it is also easy to understand that these processes may be executed synchronously or asynchronously, for example, in a plurality of modules.

It is to be understood that the present application is not limited to the precise structures described above and shown in the accompanying drawings, and modifications and changes can be made without departing from the scope of the present application. The scope of the present application is limited only by the appended claims.

## Claims

1. A font library generation method, comprising:
acquiring a stylized stroke library which comprises a plurality of stylized strokes;
establishing a stylized component library based on a basic component library and the stylized stroke library, the stylized component library comprising a plurality of stylized components;
stylizing each character based on a structure library and the stylized component library to obtain a corresponding stylized character; and
storing the stylized character in a font library.

2. The method of claim 1, wherein the step of acquiring a stylized stroke library comprises:
importing the stylized stroke library; and/or
in response to an instruction for adjusting another stroke library, adjusting strokes in the another stroke library to obtain the stylized stroke library.

3. The method of claim 1, wherein after acquiring a stylized stroke library, the method further comprises:
deforming at least part of the stylized strokes according to a deformation rule of strokes in the basic component library, so as to obtain variant forms of the at least part of the stylized strokes, and adding the variant forms into the stylized stroke library.

4. The method of claim 1, wherein the step of establishing a stylized component library based on a basic component library and the stylized stroke library comprises:
replacing strokes of at least some components in the basic component library with corresponding stylized strokes in the stylized stroke library to obtain the stylized component library.

5. The method of claim 4, wherein after establishing a stylized component library based on a basic component library and the stylized stroke library, the method further comprises:
deforming at least part of the stylized components according to a component deformation rule to obtain variant forms of the at least part of the stylized components, and adding the variant forms into the stylized component library.

6. The method of claim 1, wherein the step of stylizing each character based on a structure library and the stylized component library to obtain a corresponding stylized character comprises:
determining at least one first component constituting the character and a first structure corresponding to the character in the structure library;
selecting a first stylized component corresponding to each of the first components from the stylized component library according to a form correspondence rule; and
combining the first stylized components according to the first structure to obtain the stylized character.

7. The method of claim 6, wherein the step of combining the first stylized components according to the first structure comprises:
putting the first stylized components into corresponding positions in the first structure.

8. The method of claim 7, wherein the first structure further comprises a component center of gravity, and the step of putting the first stylized components into corresponding positions in the first structure comprises:
putting the first stylized components into the corresponding positions in the first structure according to the component center of gravity.

9. The method of claim 6, wherein before stylizing each character based on a structure library and the stylized component library to obtain a corresponding stylized character, the method further comprises:
in response to an instruction for adjusting the structure library, adjusting at least some structures in the structure library.

10. The method of claim 9, wherein the instruction is configured to adjust at least one of component spacing, visual center of gravity, component center of gravity, visual typeface and component type face.

11. A font library generation apparatus, comprising:
an acquisition module for acquiring a stylized stroke library which comprises a plurality of stylized strokes;
an establishment module for establishing a stylized component library based on a basic component library and the stylized stroke library, the stylized component library comprising a plurality of stylized components;
a stylization module for stylizing each character based on a structure library and the stylized component library to obtain a corresponding stylized character; and
a storage module for storing the stylized character in a font library.

12. An electronic device comprising a memory and a processor, wherein the memory stores program instructions which, when executed by the processor, cause the processor to implement the method of any one of claims 1-11.

13. A computer-readable storage medium storing program instructions, wherein the program instructions, when executed by a processor, cause the processor to implement the method of any one of claims 1-11.
